## Europäisches Patentamt

## European Patent Office

## Office européen des brevets

(11) Veröffentlichungsnummer: **0 128 864**
**B1**

(12) **EUROPÄISCHE PATENTSCHRIFT**

(45) Veröffentlichungstag der Patentschrift:
29.03.89

(21) Anmeldenummer: **84810251.3**

(22) Anmeldetag: **24.05.84**

(51) Int. Cl.⁴: **A 01 D  84/00,** A 01 D  89/00

(54) Vorrichtung zum Aufsammeln von auf dem Boden liegendem Pflanzengut.

(30) Priorität: **08.06.83  CH 3131/83**

(43) Veröffentlichungstag der Anmeldung:
**19.12.84 Patentblatt 84/51**

(45) Bekanntmachung des Hinweises auf die Patenterteilung:
**29.03.89 Patentblatt 89/13**

(84) Benannte Vertragsstaaten:
**AT BE DE FR GB IT NL**

(56) Entgegenhaltungen:
**DE-A-2 843 775**
**DE-A-2 843 782**
**DE-A-3 047 878**
**US-A-4 309 863**

(73) Patentinhaber: **Müller, Paul E. Dipl.- Ing.,**
**Herdernstrasse 16, CH- 8004 Zürich (CH)**

(72) Erfinder: **Müller, Paul E. Dipl.- Ing.,**
**Herdernstrasse 16, CH- 8004 Zürich (CH)**

(74) Vertreter: **Feldmann, Clarence Paul, c/o**
**Patentanwaltsbüro FELDMANN AG Postfach**
**Kanalstrasse 17, CH- 8152 Glattbrugg (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung zum Aufsammeln von auf dem Boden liegendem Pflanzengut, mit mindestens einem, um eine senkrechte Achse rotierenden, trommelförmigen Rotor, der an seinem unteren Ende mit einem konischen Kragen versehen ist, der eine Vielzahl von Bodenabtast- und Pflanzengutaufnahmeelemente trägt.

In der Vergangenheit wurde das auf dem Boden liegende Pflanzengut von Heuwerbemaschinen verschiedener Bauart gezettet oder in Schwaden gelegt. Die Schwaden wurden von Aufnahmegeräten, zum Beispiel Pickup, aufgenommen und in Pressen zu Ballen verdichtet, oder in einen Ladewagen gefördert oder in einem Häcksler weiterverarbeitet. Alle diese Geräte, ob über eine Zapfwelle oder bodenangetrieben, haben eines gemeinsam: Sie sind mit Stahlfederzinken ausgerüstet, die den Boden abtasten und das Pflanzengut bearbeiten. Diese Geräte haben einen wesentlichen Nachteil: Die Federzinken, die das Pflanzengut bearbeiten und fördern, haben nur eine endliche Lebensdauer. Dies erklärt sich durch die Beanspruchungen, denen die Zinken durch die Bodenunebenheiten und durch das zu fördernde Pflanzengut ausgesetzt sind. Eines Tages brechen diese Elemente unbemerkt während des Arbeitsganges, und ein abgebrochener Teil der meist aus Federstahl hergestellten Elemente befindet sich praktisch unauffindbar im Erntegut. Die Nachfolgemaschine, sei es nun eine Presse oder ein Häcksler, erleidet durch diese meist gehärteten Metallteile schwerste Beschädigungen, welche kostspielige Reparaturen erfordern.

Dieses schwerwiegende Problem wurde erkannt und seit kurzer Zeit sind nun Vorrichtungen der eingangs beschriebenen Art auf dem Markt, die ohne Federzinken arbeiten. So zeigt beispielsweise die DE-A-2 843 782 eine Heuerntemaschine ohne Metallzinken. Die Maschine hat eine drehbare Trommel an der eine Vielzahl plattenförmiger Bodenabtast- und Aufnahmeelemente aus Gummi angebracht ist. Diesen einfachen aus Gummi hergestellten Elementen fehlen jedoch jegliche, zur Verbesserung der Wirksamkeit, erforderlichen Pflanzengut-Förderorgane. Die US-A-4 309 863 zeigt eine ähnliche Maschine, nur ist hier ein einziges, rings um die Trommel herum geführtes Aufnahmeelement vorgesehen. Die DE-A-2 843 775 zeigt eine gabellose Heuerntemaschine in vielen Varianten. Dabei sind auch Varianten dargestellt, welche an der Oberseite des konischen Kragens mit Pflanzengut-Förderorganen versehen. Es sind aus dieser Patentschrift aber keine Bodenabtast und Pflanzengutaufnahmeelemente bekannt geworden, die mit Pflanzengut-Förderorganen versehen- und als einzeln auswechselbare Verschleissteile ausgebildet sind.

Es ist hier vielmehr so, dass bei einem die Wirkung beeinträchtigendem Verschleiss, der weiche, verformbare Ringkragen als Ganzes, zusammen mit den damit verbundenen Pflanzengut-Förderorganen ausgewechselt werden muss. Das Auswechseln eines solchen einstückigen Aufnahmeelementes ist kostspielig und arbeitsaufwendig.

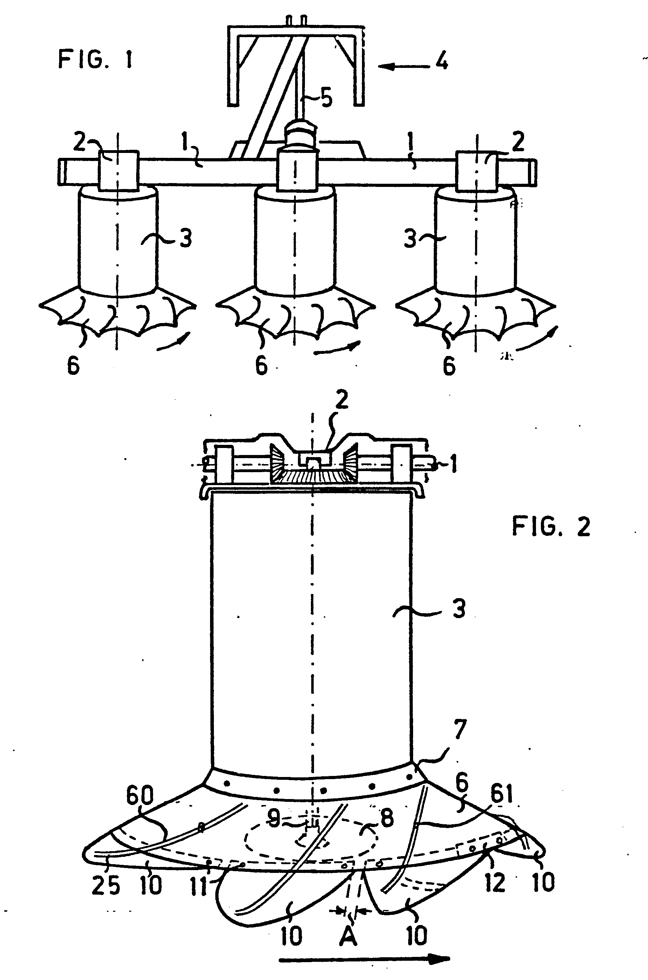

In der Figur 1, der beiliegenden Zeichnung ist eine solche, den Stand der Technik bildende Vorrichtung dargestellt. Die an einer Dreipunktaufhängung einer Zugmaschine angelenkte Vorrichtung besteht im wesentlichen aus einem Querbalken, in den eine, über eine Zapfwelle angetriebene, unterteilte Antriebswelle verläuft, die drei trommelförmige Rotoren in Drehung versetzt.

An der Unterseite der Rotoren sind Kragen aus elastischem Material angeordnet, die den Boden abtasten, das Pflanzengut aufnehmen und in Zusammenwirkung mit Förderelementen seitlich rückwärts versetzen, so dass sich eine Schwad bildet. Diese als Heuwerbemaschine konzipierte Vorrichtung hat jedoch den grossen Nachteil, dass der konische, fläche Kragen kostspielig ist und sich beim ständigen Kontakt mit dem Boden und dem Pflanzengut rasch abnützt. Die Abnützung, die besonders stark am Umfang des flexiblen Kragens erfolgt, beeinträchtigt auch stark die Qualität der Arßeit der Vorrichtung insbesondere deren Fähigkeit, das Pflanzengut aufzunehmen und zu fördern. Es ist dem Anwender nicht zuzumuten, diesen kostspieligen Teil als Gesamtheit immer wieder ersetzen zu müssen. Es ist die Aufgabe der vorliegenden Erfindung eine, derartige Vorrichtung zu schaffen, bei der die, dem Verschleiss unterworfenen Bodenabtast- und Pflanzengutaufnahmeelemente nicht nur auswechselbar sind, sondern einen besseren Wirkungsgrad haben, als bisher bekannte Elemente dieser Art. Diese Aufgabe löst die Vorrichtung gemäss Oberbegriff des Patentanspruches dadurch, dass die Bodenabtast- und Pflanzengutaufnahmeelemente eine schiefe, gegen die Drehrichtung ansteigende Pflanzengut-Förderfläche umfassen, winkelverstellbar mit dem konischen Kragen verbunden sind oder winkelverstellbare Teile aufweisen und als Ganzes auswechselbar sind oder mit auswechselbaren Verschleisteilen versehen sind.

Die verschiedenen Gestaltungsformen der Organe können den Patentansprüchen, ihre technische Wirkungsweise der nachfolgenden Beschreibung entnommen werden.

In der angefügten Zeichnung sind verschiedene, beispielsweise Ausführungsformen der Erfindung vereinfacht dargestellt. Neben den gezeigten Varianten sind viele weitere Einzelheiten der Erfindung in anderen Zusammensetzungen möglich, ohne dass dadurch das Prinzip der Erfindung verlassen wird.

Es zeigen:

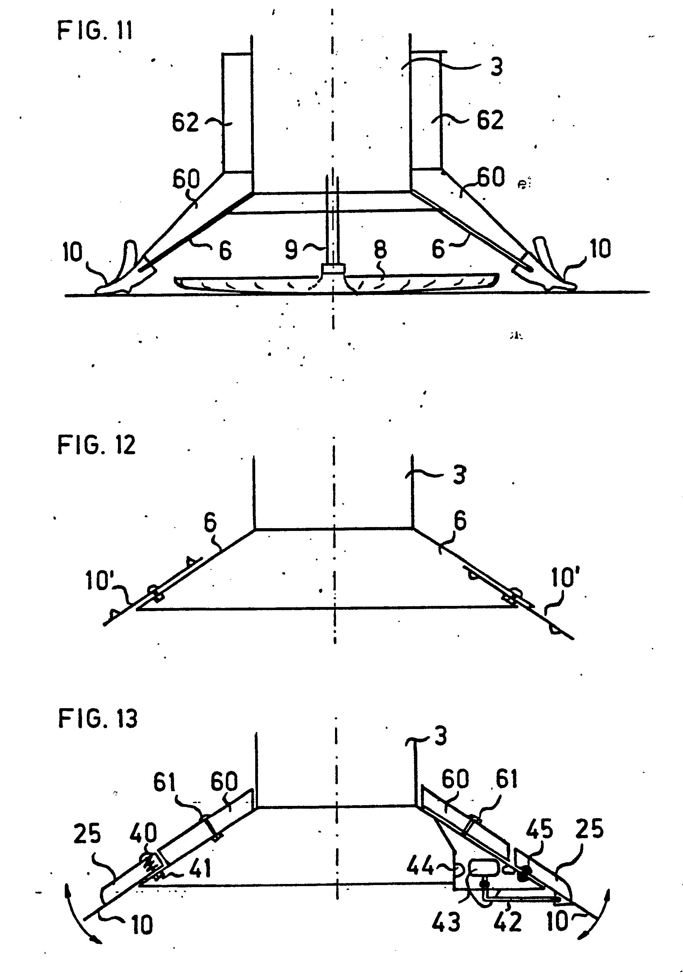

Figur 1    eine Vorrichtung gemäss
           Oberbegriff des Patentanspruches
           als Illustration des Standes der
           Technik.
Figur 2    Einen Rotor mit Kragen in teilweise
           perspektivischer Darstellung mit
           auswechselbaren Bodenabtast- und
           Pflanzengutaufnahmeelementen.
Figur 3    Eine Teilansicht des Kragens mit
           einem kappenartigen auf dem
           Bodenabtast- und
           Pflanzengutaufnahmeelement
           angebrachten, auswechselbaren
           Verschliesssteil in Ansicht von oben
           und
Figur 4    dasselbe Element im Schnitt
           gemäss der Linie B - B in Figur 3,
Figur 5    zeigt eine Variante eines
           auswechselbaren Verschleissteiles
           und
Figur 6    dasselbe, wiederum im Schnitt
           gemäss der Linie C - C in Figur 5,
Figur 7    zeigt einen verstellbaren
           auswechselbaren Verschleissteil in
           Ansicht von oben,
Figuren 8 - 10 zeigen auswechselbare
           Bodenabtast- und
           Pflanzengutaufnahmeelemente mit
           Pflanzengutfördeorganen.
Figuren 11 - 13 sind Schnitte durch den Rotor mit
           anmontierten Elementen und
           Pflanzengutförderorganen, wobei
Figur 11   eine zusätzliche
           Bodengrobabtastung zeigt,
Figur 12   veranschaulicht drehbar am Kragen
           montierte Bodenabtast- und
           Pflanzengutförderelemente, und
           schliesslich
Figur 13   Elemente, die in einer Ebene vertikal
           zur Kragenoberfläche schwingen
           können.

Die zum Stand der Technik gehörende Vorrichtung, im vorliegenden Beispiel eine Heuwerbemaschine, ist in Figurigezeigt. Die unterteilte Antriebswelle 1 treibt über Getriebe 2 die Rotoren 3. Die gesamte Vorrichtung ist über eine Dreipunktaufhängung 4 mit einer nicht dargestellten Zugmaschine verbunden. Diese treibt auch die unterteilte Antriebswelle 1 über eine Zapfwelle 5. Selbstverständlich lässt sich die Vorrichtung auch durch Bodenantrieb oder über Keilriemen antreiben. An den Rotoren 3 sind unten, in Bodennähe, Kragen 6 angeordnet, die die Mehrfachfunktionen, den Boden abzutasten, das Pflanzengut vom Boden aufzunehmen und das Pflanzengut zu fördern, übernehmen. Die Förderung des Pflanzengutes erfolgt sowohl in Zugrichtung, wie auch seitlich, in der Zeichnung nach links.

Ein einzelner Rotor 3 nach der Erfindung ist in Figur 2 dargestellt. Dieser wird wie bereits anhand der Figur 1 beschrieben, von der Antriebswelle 1 über das Getriebe 2 getrieben. Der flexible, nach aussen gerichtete Kragen 6 ist an einem kegelstumpfförmigen Ansatz 7 auswechselbar am Rotor 3 gehalten. Die Grobabtastung des Bodens erfolgt über einen, unterhalb des Kragens 6, mit der zentralen Achse 9 verbundenen, Stützteller 8.

An der Peripherie des Kragens 6 sind eine Vielzahl von Elementen 10 auswechselbar befestigt. Ihre obere Fläche weist einen gegen die Drehrichtung ansteigenden als Pflanzenförderfläche ausgebildeten Teil auf, der zusätzlich mit Rippen versehen ist. Entsprechend ihrer Funktion werden sie im nachfolgenden Bodenabtast- und Pflanzengutaufnahmeelemente, oder kürzer Abtast- und Aufnahmeelemente 10 genannt. In der hier dargestellten Variante handelt es sich um flexible Elemente, die den Bodenunebenheiten leicht folgen können, während sie in der Richtung der Rotationsebene relativ steif sind. Die Befestigung der Abtast- und Aufnahmeelemente kann vielfältig erfolgen, so zum Beispiel durch Schrauben oder Nieten 11, durch Kleben oder durch einen am Kragen angeordneten Klemmring. Der Abstand zwischen den Befestigungsstellen 11, sowie der Abstand A zwischen zwei benachbarten Abtast- und Aufnahmeelementen 10 muss genügend gross sein, damit sie Vertikalbewegungen, die die Elemente 10 und der Kragen 6 ausführen, folgen können, ohne dass Risse im Kragen 6 auftreten. Zusätzlich kann am Kragen 6 zwischen zwei benachbarten Befestigungsstellen 11 ein flexibles Verbindungsstück 12 aus hochreissfestem Material vorgesehen sein, welches auch den gesamten Rand des Kragens 6 umgeben kann, welches Beschädigungen des Kragens 6 durch Kollisionen mit festen Gegenständen, beispielsweise Steinen, vermeidet.

Der Kragen 6 muss nicht aus elastischem Material sein. Ist, wie oben beschrieben ein Stützteller 8 vorgesehen, der die Grobabtastung des Bodens übernimmt, genügt es, wenn die Elemente 10 flexibel genug sind um die Feinabtastung zu übernehmen.

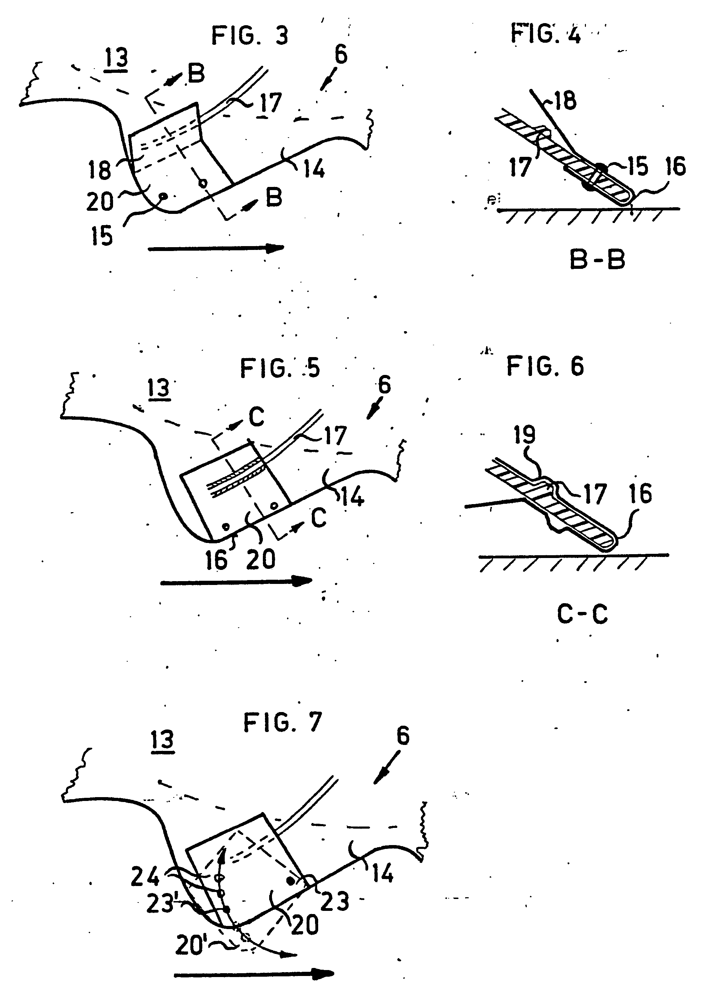

Der in den Figuren 3 - 7 dargestellt konische Kragen 6 weist eine Grundform 13 mit einem gewellten Rand auf, dessen finnenartig vorstehende Teile 14 Bodenabtast- und Pflanzengutaufnahmeelemente bilden. Die Bodenabtast- und Pflanzengutaufnahmeelemente sind hier mit auswechselbaren Teilen 20 versehen, die sowohl einen auswechselbaren Verschleissschutz für die Aufnahmelemente 14 bilden als auch der Pflanzengutförderung dienen, indem sie eine schiefe, gegen die Drehrichtung ansteigende Fläche 18 aufweisen. Die besonders stark dem Verschleiss durch Reibung ausgesetzte Vorderkante 16 ist gut geschützt.

Bei der Ausführung nach den Figuren 3 bis 6 lässt sich der Anstellwinkel der Fläche 18 verstellen, während bei der Ausführung nach Figur 7 der Verschleissteil 20 auch noch eine Winkelverstellung der Bodenabtastkante erlaubt.

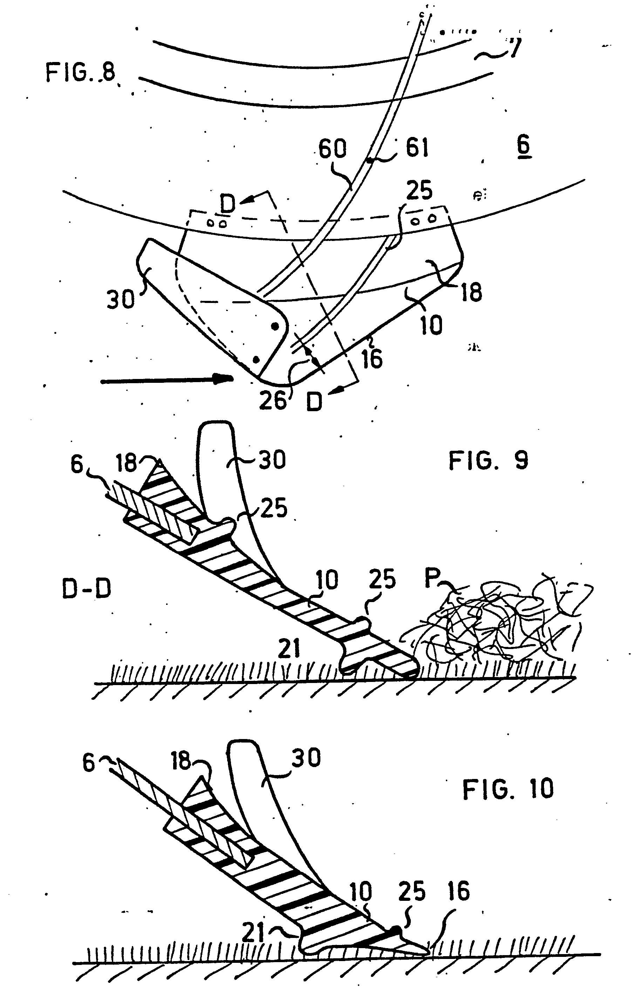

In den Figuren 8 - 10 ist wiederum ein Bodenabtast- und Pflanzengutaufnahmeelement 10 gezeigt, welches als Ganzes auswechselbar: am Kragen 6 befestigt ist.

Die Elemente 10 sind hier mit Förderrippen 25 versehen. Die der Vorderkante 16 nächst liegende Förderrippe muss dabei aber auch einen Mindestabstand 26 zur Vorderkante aufweisen, die die Aufnahme des Pflanzengutes P auf die Elemente 10 ermöglicht. Die Förderrippen 25 können zum Teil zudem mit ebenfalls auswechselbar am Kragen 6 gehaltenen Förderrippen 60 fluchten. Obwohl die Förderrippen 25 in den dargestellten Beispielen einstückig mit den Elementen 10 ausgeführt sind, können diese aber auch auswechselbar ausgestaltet sein. Das Element 10 nach Fig. 8 weist als Besonderheit noch ein auswechselbares flügelartiges Pflanzenförderorgan 30 auf. Auch dieses kann wiederum als Einheit an den Pflanzengutaufnahmeelementen 10 konzipiert sein, oder auswechselbar am Kragen 6 befestigt werden, falls der Kragen integrale Aufnahmeelemente 14 die in den Figuren 3 - 7 aufweist.

Das Pflanzengutförderorgan 30 hat eine in Gegendrehrichtung ansteigende Ebene und gleicht einem Flügel. Die Wirkung der Förderorgane 30 besteht darin, dass die Bodenabtast- und Pflanzengutaufnahmeelemente, welche unwillkürlich auch bei bester Bodenabtastung miteingemischte Erde, auf den Kragen auftrage, diese nicht zusammen mit dem Pflanzengut zum Rotor hin hoch fördern.

Sie erzeugen einen Luftstrom, der die Verunreinigungen aus dem Pflanzengut herausbläst.

Diese Wirkung wird zusätzlich durch eine zum Rotor hin auflaufende, schräge Ebene 18 verstärkt. In den Schnittzeichnungen, Figuren 9 und 10, sind auch die an den Elementen 10 angebrachten Förderrippen 21 an der Unterseite ersichtlich, die ein Einfräsen der Elemente 10 im Boden verhindern, eine Bodenabtastung sicherstellen, und möglichst wenig Beimischung von Erde ins Pflanzengut P bewirken. Je nach dem zu erntenden Pflanzengut ist es auch wesentlich, die Vorderkante 16 mit einem entsprechenden Radius zu versehen.

Vorzugsweise liegt dieser Radius in einem Bereich zwischen 1 und 10 mm. Eine Anpassung der erfindungsgemässen Vorrichtung an das zu bearbeitende Pflanzengut, kann durch Anbringen von Verstellbaren Rippen 60 am Kragen 6 erfolgen. Dies verlangt entsprechend flexible Rippen, die mit verstellbaren Befestigungsmitteln 61 am Kragen 6 angeordnet sind (siehe Fig. 13).

In den Figuren 11 - 13 ist die Vorrichtung nochmals wie in der Figur 2 als Vertikalschnitt im Bereich dines Rotors dargestellt In Figur 11 ist ein relativ grosser Stützteller 8 im Schnitt gezeichnet, der auf einer Achse 9 sitzt. Der Stützteller 8 kann starr auf der Achse 9 befestigt sein und lediglich die Funktion eines Gleitschutzes haben, oder drehbar auf der Achse gehalten sein und allein durch die Reibung und den Bodenunebenheiten in Drehbewegung versetzt werden. Möglich ist aber auch, den Stützteller vom Getriebe 2 aus zu treiben.

Die Bodenabtast- und Pflanzengutaufanehmeelemente 10 entsprechen jenen nach den Figuren 8 - 10. Die auf dem Kragen 6 des Rotors angebrachten Führungsrippen 60 verlaufen hier vom Element 10 zum Rotor 3 hin ansteigend (Figur 11) und gehen in dem Rotor 3 befestigten Ventilationsflügel 62 über. Zusammen mit den flügelartigen Pflanzengutförderorganen 30 ergibt sich eine reinigende Wirkung des Pflanzengutes wie seither oben bereits beschrieben.

Die Bodenabtast- und Pflanzengutaufnahmeelemente lassen sich auch als bodengetriebene, Rotationskörper 10 mit gegen die Drehrichtung ansteigender Förderfläche ausbilden (Figur 12), die am Kragen 6 dreh- und auswechselbar montiert sind. Eine solche Version kommt insbesondere in Frage bei einer Vorrichtung mit einem Kragen 6 aus relativ starrem Material. Denkbar ist selbstverständlich auch eine Anordnung der Element unten am Kragen 6, wie auf der rechten Seite der Figur 12 dargestellt ist. In der Figur 13 sind nochmals zwei Varianten dargestellt. Die linke Hälfte der Figur zeigt ein Bodenabtast- und Pflanzengutaufnahemelement 10, welches in einer vertikal zum Kragen 6 verlaufenden Ebene auf und abwärts schwingen kann.

Hierzu ist das Element 10 mittels einer Druckfeder 40 und einem Bolzen 41 schwenkbar am Kragen befestigt. Diese Bewegung erlaubt es auch sowohl den Kragen 6, wie das auswechselbare, als Verschleissteil ausgebildete Element 10 aus relativ starrem Material zu fertigen. Die Schwingung des Elementes 10 erlaubt somit die Feinbodenabtastung und hat den zusätzlichen Effekt, die Schwingung auf das Pflanzengut zu übertragen und dadurch wiederum das Pflanzengut von beigemischter Erde reinigen.

Die rechte Hälfte der Figur 13 zeigt ein Bodenabtastund Pflanzengutaufnahmeelement 10, welches ebenfalls in einer vertikal zum Kragen verlaufen den Ebene auf- und abwärts schwenkbar ist. Hier muss der Kragen aus starrem Material sein. Das Element 10 ist über ein abgewinkeltes Gestänge 42 mit einem, der Fliehkraft ausgesetzten Gewicht 43 verbundem, welches sich innerhalb der durch Anschläge 44 gebildeten Grenzen bewegen kann. Das Element 10 ist mit einem gummielastischen Verbindungselement 45 am Kragen 6 angelenkt. Durch die Drehbewegung des Rotors 3 wird das Gewicht 43 nach aussen geschleddert und drückt somit das Bodenabtastelement 10 zum Boden hin. Auch bei relativ hohen Drehgeschwindigkeiten ist dadurch eine korrekte Bodenabtastung sichergestellt.

Auch in den hier dargestellten Fällen sind die Förderrippen 25 der Aufnahmeelemente flüchtend auf die Förderrippen 60 des konischen Kragens ausgerichtet.

Die Elemente 10 können sich auch vertikal zur Oberfläche des Kragens 6 sich bewegen, wenn die Verbindung des Elementes 10 mit dem Kragen 6 über ein flexibles Zwischenstück beispielsweise ein hochreissfestes Kunststoff-Band oder -Plättchen erfolgt.

Auch können die Förderrippen 25 so verlängert sein, dass sie sich bis auf den Kragen 6 erstreckern und somit in der Verlängerung gleich den Förderrippen 60 entsprechen.

Die erfindungsgemässe Vorrichtung sammelt in erster Linie das auf dem Boden liegende Pflanzengut auf und reinigt in zweiter Linie das Pflanzengut von Verunreinigungen. Zu diesem Zeck wird, wie bereits beschrieben, das Pflanzengut mittels den Pflanzengutförderorganen (25, 30, 60) hoch gefördert. Erfolgt die Förderung durch die flügelartigen Elemente 30, so wird das Pflanzengut derart hoch geschleudert, dass es noch in der Schwebephase von einem Nachfolgegerät, an dem die erfindungsgemässe Vorrichtung befestigt ist, erfasst und sogleich weiter bearbeitet werden kann.

## Patentansprüche

1. Vorrichtung zum Aufsammeln und Bearbeiten von auf dem Boden liegendem Pflanzengut mit mindestens einem, um eine senkrechte Achse rotierenden, trommelförmigen Rotor (3), der an seinem unteren Ende mit einem konischen Kragen (6) versehen ist, der eine Vielzahl von Bodenabtast- und Pflanzengutaufnahmeelemente (10) trägt, dadurch gekennzeichnet, dass die Bodenabtast- und Pflanzengutaufnahmeelemente ein schiefes gegen die Drehrichtung ansteigendes Pflanzengut-Förderorgan (25, 30, 60, 61) umfassen, winkelverstellbar mit dem konischen Kragen (6) verbunden sind oder winkelverstellbare Teile aufweisen und als Ganzes auswechselbar sind oder mit auswechselbaren Verschleissteilen versehen sind.

2. Vorrichtung nach Anspruch 1, dadurch gekennzeichnet, dass an der Unterseite der auswechselbaren Bodenabtast- und Pflanzengutaufnahmeelemente zusätzliche Pflanzengut-Förderorgane (21) angebracht sind (Fig. 6, 9, 10).

3. Vorrichtung nach Anspruch 1, dadurch gekennzeichnet, dass die auswechselbaren Bodenabtast- und Pflanzengutaufnahmeelemente (10) mit über die Kragenoberfläche emporragende, einen Luftstrom erzeugenden, flügelartigen Pflanzengut-Förderorganen (30) versehen sind.

4. Vorrichtung nach Anspruch 1, dadurch gekennzeichnet, dass die als auswechselbare Verschleissteile ausgebildeten Bodenabtast- und Pflanzengutaufnahmeelement (10) federnd (40) gelagert am Kragen (6) befestigt sind und an ihrer Oberseite Förderorgane in Form von winkelverstellbaren Rippen (25) aufweisen (Figur 13).

5. Vorrichtung nach Anspruch 4, dadurch gekennzeichnet, dass die als auswechselbare Verschleissteile ausgebildeten Bodenabtast- und Pflanzengutaufnahmeelemente (10, 25) über ein Fliehkraftregelsystem (42 - 45) mit dem konischen Kragen verbunden sind (Figur 13).

6. Vorrichtung nach Anspruch 1, dadurch gekennzeichnet, dass die Bodenabtast- und Pflanzengutaufnahmeelemente entweder als Ganzes oder nur deren flügelartig ausgebildeten Pflanzenförderorgane (30) auswechselbar sind.

7. Vorrichtung nach Anspruch 1, dadurch gekennzeichnet, dass die Bodenabtast- und Pflanzengutaufnahmeelemente (10) integral damit verbundene flügelartige Pflanzengut-Förderorgane (30) aufweisen und als Ganzes auswechselbar sind (Figur 9 und 10).

8. Vorrichtung nach Anspruch 1, dadurch gekennzeichnet, dass die auswechselbaren, dem Verschleiss unterworfenen Bodenabtast- und Pflanzengutaufnahemeelemente (10) beim Betrieb um eine am Kragen (6) angebrachte, etwa senkrecht zu diesem Verlaufende Drehachse rotieren, und auf ihrer Oberseite als Pflanzengut-Förderorgane wirkende winkelverstellbare Rippen aufweisen.

9. Vorrichtung nach Anspruch 1, dadurch gekennzeichnet, dass ein Stützteller (8) fest oder drehbar auf der Achse (9) des Rotors (3) montiert ist der an seinem Umfang in der Nähe des Aufnahmebereiches des Pflanzengutes hochgezogen ist.

## Claims

1. A device intended for gathering and displacing crop lying on the ground, with at least one drum turning on a vertical axis and equipped in its lower portion with a conical shaped collar (6) bearing multiple soil feeling and crop gathering elements (10), characterized by the fact that the soil feeling and crop gathering elements comprise a crop displacement means (25, 30, 60, 61) tilted and raised in the direction opposite the direction of rotation, that they are fixed to the collar (6) in such a way that the angle obtained is adjustable or include adjustable parts and are entirely interchangeable or equipped with interchangeable wearing parts.

2. A device as in claim 1, characterized by the fact that the interchangeable soil feeling and crop gathering elements comprise additional crop displacement means (21) on their lower side (Fig. 6, 9, 10).

3. A device as in claim 1, characterized by the fact that the interchangeable soil feeling and crop gathering means (10) are equipped with blade shaped crop displacement means (30) rising to the upper side of the collar and producing an air stream.

4. A device as in claim 1, characterized by the fact that the soil feeling and crop gathering elements (10) forming interchangeable wearing parts are fastened to the collar (6) by means of springs (40) and are equipped on their upper side with displacing means in form of adjustable ribs (25) (Fig. 13).

5. A device as in claim 4, characterized by the fact that the soil feeling and crop gathering elements (10, 25) forming interchangeable wearing parts are coupled to the conical shaped collar by means of a system (42 - 45) of regulation by the centrifugal force (Fig. 13).

6. A device as in claim 1, characterized by the fact that the soil feeling and crop gathering elements are entirely interchangeable or that only their blade shaped crop move gears (30) are interchangeable.

7. A device as in claim 1, characterized by the fact that the soil feeling and crop gathering elements (10) comprise integrant blade shaped crop displacement means (30) and are interchangeable as a whole (Fig. 9 and 10).

8. A device as in claim 1, characterized by the fact that the interchangeable soil feeling and crop gathering elements (10) subject to wear turn during work on an about perpendicular axis fixed to the collar (6) and are equipped on their upper side with crop displacement means constituted by adjustable ribs.

9. A device as in claim 1, characterized by the fact that a carrying plate (8) is mounted mobile or fast on the axis of the drum (3), which plate is raised on its periphery in the near of the crop gathering zone.

**Revendications**

1. Dispositif destiné au ramassage et au déplacement de matières végétales répandues sur le sol, comportant au moins un rotor en forme de tambour (3) tournant autour d'un axe vertical et muni, à son extrémité inférieure, d'une collerette conique (6) sur laquelle sont fixés plusieurs éléments de palpage du sol et de ramassage des végétaux (10), caractérisé par le fait que les éléments de palpage du sol et de ramassage des végétaux comportent un organe de déplacement de végétaux (25, 30, 60, 61) qui est incliné et qui s'élève dans la direction opposée au sens de rotation, qu'ils sont liés à la collerette (6) de sorte que l'angle formé avec elle soit réglable ou possèdent des pièces dont la position est réglable et qu'ils sont interchangeables en totalité ou sont munis de pièces d'usure interchangeables.

2. Dispositif selon la revendication 1, caractérisé par le fait que les éléments interchangeables de palpage du sol et de ramassage des végétaux comportent des organes de déplacement de végétaux supplémentaires (21) sur leur côté inférieur (Fig. 6, 9, 10).

3. Dispositif selon la revendication 1, caractérisé par le fait que les éléments interchangeables de palpage du sol et de ramassage de végétaux (10) sont équipés d'organes de déplacement de végétaux (30) en forme d'ailettes, s'élevant au-dessus de la face supérieure de la collerette et produisant un courant d'air.

4. Dispositif selon la revendication 1, caractérisé par le fait que les éléments de palpage du sol et de ramassage des végétaux (10), constituant des pièces d'usure interchangeables, sont fixés à la collerette (6) à l'aide de ressorts (40) et sont pourvus à leur face supérieure d'organes de déplacement en forme de nervures orientables (25) (Fig. 13).

5. Dispositif selon la revendication 4, caractérisé par le fait que les éléments de palpage du sol et de ramassage des végétaux (10, 25) constituant des pièces d'usure sont reliés à la collerette conique par un système (42 - 45) de réglage par la force centrifuge (Fig. 13).

6. Dispositif selon la revendication 1, caractérisé par le fait que les éléments de palpage du sol et de ramassage des végétaux sont interchangeables en totalité, ou que seuls leurs organes de déplacement de végétaux en forme d'ailettes (30) sont interchangeables.

7. Dispositif selon la revendication 1, caractérisé par le fait que les éléments de palpage du sol et de ramassage des végétaux (10) comportent des organes de déplacement de végétaux en forme d'ailettes (30) avec lesquels ils forment un ensemble interchangeable dans son intégralité (Fig. 9 et 10).

8. Dispositif selon la revendication 1, caractérisé par le fait que les éléments de palpage du sol et de ramassage des végétaux (10) qui sont soumis à l'usure, tournent durant le fonctionnement autour d'un axe qui est fixé à la collerette (6) et qui est sensiblement perpendiculaire à celle-ci, et présentent sur leur face supérieure des organes de déplacement de végétaux en forme de nervures orientables.

9. Dispositif selon la revendication 1, caractérisé par le fait qu'une assiette porteuse (8) est montée de façon fixe ou mobile sur l'axe (9) du rotor (3), le pourtour de cette assiette étant relevé dans le voisinage de la zone de ramassage des végétaux.

EP 0 128 864 B1

FIG. 1

FIG. 2

FIG. 3

FIG. 4

B-B

FIG. 5

FIG. 6

C-C

FIG. 7

FIG. 8

60  61   **6**

D   25

30   18

10

16

26  D

FIG. 9

6  18   30

25

D-D

10  25  P

21

FIG. 10

6  18   30

10  25  16

21

FIG. 11

FIG. 12

FIG. 13